(19) Europäisches Patentamt
European Patent Office
Office européen des brevets

(11) **EP 1 160 553 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(51) Int Cl.:
***G01L 1/16*** *(2006.01)*     ***G01L 3/10*** *(2006.01)*

(21) Anmeldenummer: **01108743.4**

(22) Anmeldetag: **06.04.2001**

(54) **Adapter mit Sensor zum Einbau zwischen einen eintreibenden Motor und ein abtreibendes Getriebe sowie Baureihe von Adaptern mit einem solchen Adapter**

Adaptor with sensor for being mounted between a driving motor and a driven transmission, and series of adaptors comprising such an adaptor

Adapteur avec capteur, destiné notamment à être monté entre un moteur d'entraînement et une transmission entrainé, et gamme des adapteurs comprenant un tel adapteur

(84) Benannte Vertragsstaaten:
**AT BE CH CY DE DK ES FI FR GB GR IE IT LI LU MC NL PT SE TR**

(30) Priorität: **17.05.2000 DE 10024339**

(43) Veröffentlichungstag der Anmeldung:
**05.12.2001 Patentblatt 2001/49**

(73) Patentinhaber: **Sew-Eurodrive GmbH & Co. KG**
**76646 Bruchsal (DE)**

(72) Erfinder:
• **Bader, Antonius**
**76646 Bruchsal (DE)**
• **Müller, Mathias**
**76437 Rastatt (DE)**
• **Bolz, Heinrich, Dr.**
**76689 Karlsdorf-Neuthard (DE)**
• **Denefleh, Roland**
**64683 Einhausen (DE)**
• **Leibold, Hubert**
**76694 Forst (DE)**
• **Stephany, Klaus**
**76646 Bruchsal (DE)**
• **Zimmermann, Heinrich**
**76646 Bruchsal (DE)**

(56) Entgegenhaltungen:
**DE-A- 2 147 974**     **DE-B- 1 103 633**

• **BALDAUF W: "FREQUENZANALOGE DREHMOMENTMESSUNG MIT OBERFLAECHENWELLEN- RESONATOREN" TECHNISCHES MESSEN TM, R.OLDENBOURG VERLAG. MUNCHEN, DE, Bd. 58, Nr. 9, 1. September 1991 (1991-09-01), Seiten 329-334, XP000262330 ISSN: 0171-8096**

**Beschreibung**

Die Erfindung betrifft einen Adapter und eine Baureihe von Adaptern.

Aus den Veröffentlichungen W. Baldauf, VDI-Forschrittsberichte, Reihe 8, Nr. 380, 1994 und J. Michel, Dissertation TU München 1996 sind Systeme zur Messung einer physikalischen Größe wie Drehmoment bei einer drehbaren Welle bekannt.

Zu weiteren physikalischen Größen, deren Messung interessant wäre, zählen beispielhaft die axiale und radiale Kräfte, entsprechende Kraftverteilungen und das Drehmoment, welche auf die drehbare Welle übertragen werden. Als radiale Kraft ist insbesondere auch die sogenannte Querkraft von Interesse, die in dieser Schrift als die zur Achse der drehbaren Welle radial wirkende Kraftkomponente, also die Radialkraft, verstanden wird. Unter drehbarer Welle werden in dieser Schrift, soweit sinnvoll, immer auch in Verallgemeinerung drehende Teile verstanden.

Gemeinsam ist bei solchen Systemen, dass sie aufwendig und kostspielig sind. Diejenigen Systeme, die einen oder mehrere Sensoren auf einer drehbaren Welle aufweisen, benötigen eine Energieversorgung für den sich mitdrehenden Teil der Elektronik. Teilweise werden hierfür Batterien eingesetzt, die nach einer gewissen Betriebszeit ausgetauscht werden müssen und viel Platz benötigen. Außerdem benötigt der mitdrehbare Teil der Elektronik ebenfalls viel Platz. Hohe elektrische und/oder magnetische Felder können zusätzlich den Einsatz erschweren. Außerdem sind Kontakte, beispielsweise für Batterien, vorhanden, die in Ausnahmefällen zu Funkenbildung führen können. Daher sind explosionsgeschützte Ausführungen nur aufwendig fertigbar.

Ein industrieller Antrieb weist einen Getriebemotor auf, der mindestens ein Getriebe und einen Motor umfasst. Der Einsatz bekannter Systeme zur Messung von Drehmoment ist aufwendig, da für jeden einzelnen Fall ein solches System angepasst werden muss und im Allgemeinen eine schwierigere Anlagenkonstruktion notwendig wird.

Aus dem Gesamtkatalog 2000 der Firma Burster Präzisionsmesstechnik GmbH & Co KG, http://www.burster.de, ist eine Messung von Reaktionsdrehmoment bekannt.

Aus der DE-A-2 147 974 ist eine Vorrichtung bekannt, bei dem eine berührungslose Drehmomenterfassung vorgesehen ist.

Aus der Veröffentlichung tm - Technisches Messen 58, September 1991, Nr. 9, W. Baldauf: "Frequenzanaloge Drehmomentmessung mit Oberflächenwellen-Resonatoren", Seiten 329 - 334, München, DE, ist eine Erfassung des Drehmoments an einer rotierenden Welle mittels OFW-Sensoren bekannt.

Der Erfindung liegt daher bezüglich eines solchen Systems die Aufgabe zugrunde, ein kostengünstiges und einfach, ohne großen Aufwand einsetzbares und vertreibbares System, umfassend Vorrichtungen und Verfahren, zur Messung physikalischer Größen weiterzubilden.

Erfindungsgemäß wird die Aufgabe bei dem Adapter nach den in Anspruch 1 und bei der Baureihe nach den in Anspruch 7 angegebenen Merkmalen gelöst.

Wichtige Merkmale der Erfindung bei dem Adapter sind, dass der Adapter zwischen einen eintreibenden Motor und ein abtreibendes Getriebe eingebaut ist, wobei der Adapter ein Gehäuse, das zur Aufnahme von Lagern für eine Adapterwelle ausgebildet ist, die Adapterwelle und zumindest einen Sensor umfasst,

die Adapterwelle ein- und/oder abtriebseitig derart gestaltet ist, dass die Adapterwelle direkt und/oder mittels einer Kupplung an Motor und Getriebe anschließbar oder ankoppelbar ist,

wobei die vom Sensor aufgenommenen Messwerte zumindest teilweise berührungslos vom Adapter zu einer ersten elektronischen Schaltung übertragbar sind,

wobei zwischen mindestens einer Antenne des Adapters, die mit dem Sensor elektrisch verbunden ist, und einer stationären Antenne, die mit der ersten elektrischen Schaltung elektrisch verbindbar ist, Informationen und/oder Energie mindestens jeweils unidirektional übertragbar sind.

Von Vorteil ist dabei, dass bei dem Adapter ein System zur Messung von Drehmoment ausgebildet wird, das zwischen einem eintreibenden Motor und eine Getriebe einbaubar ist. Somit sind an dem Adapter Messungen physikalischer Größen einfach und kostengünstig ausführbar. Insbesondere ist der Adapter derart mit Sensorik ausstattbar und ausführbar, dass er an vielen Getrieben und Motoren eines Herstellers ohne weitere Maßnahmen, wie Zwischenflansche oder Anpassstücke oder dergleichen, einsetzbar und für die Größe der Messwerte geeignet dimensionierbar und ausführbar. Somit ist vorteilhaft eine Überwachung eines Antriebs ausführbar. Außerdem ist auch eine Prozesssteuerung ausführbar, die vom Adapter stammende Messwerte verwendet.

Weitere Anwendungsmöglichkeiten ergeben sich vorteilhaft bei Industrieanlagen beispielhaft dann, wenn Ursachen für einen Ausfall von Komponenten gesucht werden. Dabei wird dann durch den Einbau des Adapters zwischen Motor und Getriebe das Messen der physikalischen Größen möglich, die unter Umständen zum Ausfall einer Komponente, wie Getriebe, Zahnrad, Welle, Zwischenwelle, Gehäuse, Lager oder weiteren mechanischen Komponenten, geführt haben. Von Vorteil ist auch, dass physikalische Größen statisch und dynamisch, also bei nichtdrehender oder drehender Adapterwelle erfassbar sind. Außerdem ist der Adapter derart ausführbar, dass er in eine bestehende Baureihe von Motoren und Getrieben, integrierbar ist. Somit kann der Anwender dann beispielhaft einen Antrieb, umfassend Getriebe und Motor, wählen oder denselben Antrieb zusammen mit einem Adapter, der physikalische Größen zugänglich oder messbar macht. Somit ist eine Steuerung einer Anlage oder eines Prozesses ausführbar, die in Abhängigkeit von Messwerten der physikalischen Größen ausführbar ist.

Vorteilhafterweise ist auch ein Einsatz ermöglicht bei unklarer Dimensionierung eines Antriebs. Beispielhaft wird in einem solchen unsicheren Fall der Antrieb groß dimensioniert und dann durch Einbau des Adapters der Verlauf der physikalischen Größen gemessen. Danach wird gegebenenfalls ein geeignet dimensionierter Antrieb eingesetzt, beispielhaft der Motor, das Getriebe oder beide ausgetauscht.

Weiterer Vorteil ist, dass die Sensorik nicht im Ölraum ist und somit keinem das Messergebnis oder die Arbeitsweise beeinträchtigenden Öl ausgesetzt ist.

Bei einer weiteren vorteilhaften Ausgestaltung ist mindestens ein Sensor derart gestaltet und in den Adapter derart integriert oder eingebaut, dass die physikalischen Größen im drehbaren und/oder stationären Teil des Adapters gemessen werden.

Bei einer weiteren vorteilhaften Ausgestaltung sind der Motor, das Getriebe und der Adapter derart montiert, dass am Gehäuse des Adapters das Reaktionsdrehmoment mittels zumindest eines Sensors messbar ist. Von Vorteil ist dabei, dass die Messung in einfacher Weise ausführbar ist. Insbesondere ist der Austausch von Energie und Information berührungslos oder mittels elektrischer Kabel ausführbar. Außerdem ist zur Messung des Reaktionsdrehmomentes dasselbe System, also insbesondere dieselbe erste elektronische Schaltung, verwendbar. Somit ist es sogar ermöglicht verschiedene Sensoren mit ein und derselben ersten elektronischen Schaltung zu versorgen und Messwerte abzufragen. Daher sind Messwerte an verschiedenen Messpunkten kostengünstig abfragbar.

Bei einer weiteren vorteilhaften Ausgestaltung sind die vom Sensor aufgenommenen Messwerte zumindest teilweise berührungslos vom Adapter zu einer ersten elektronischen Schaltung übertragbar. Weiterer Vorteil ist dabei, dass Vorteil ist dabei, dass die Sensorik und die weitere elektronische Schaltung zur berührungslosen Übertragung geeignet ausgeführt sind und trotzdem in den Bauraum des Adapters integrierbar sind, wobei der Bauraum des Adapters durch Anforderungen, wie zu übertragendes Drehmoment, Flanschgrößen und weitere mechanische Forderungen, gegeben sind.

Bei einer weiteren vorteilhaften Ausgestaltung ist zwischen mindestens einer Antenne des Adapters, die mit dem Sensor elektrisch verbunden, und einer stationären Antenne, die mit der ersten elektrischen Schaltung elektrisch verbunden ist, Informationen und/oder Energie mindestens jeweils unidirektional übertragbar sind. Von Vorteil ist dabei, dass mittels der weiteren elektronischen Schaltung bei entsprechend geeigneter Ausführung, eine Aufbereitung, eine Auswertung und/oder eine Verarbeitung der Messdaten teilweise oder sogar ganz durchführbar ist.

Bei einer weiteren vorteilhaften Ausgestaltung ist der Sensor als Transponder ausgeführt. Bei einer anderen vorteilhaften Ausgestaltung umfasst der Adapter einen OFW-Sensor, mit welchem Energie und Information über Messwerte berührungslos übertragen werden. Von Vorteil ist dabei, dass der Sensor sogar bei hohen elektrischen und/oder magnetischen Feldstärken in der Umgebung einsetzbar ist. Außerdem ist das Bauvolumen äußerst klein. Somit ist ein solcher Sensor ohne wesentliche Umkonstruktionen oder Maßänderungen in einem Adapter einsetzbar.

Von Vorteil ist beim Einsatz eines Sensors in Form eines Transponder oder besonders in Form eines OFW-Sensors, dass Energie und Information über Messwerte berührungslos übertragbar sind und der Sensor kostengünstig herstellbar ist. Außerdem ist die Lösung kompakt und platzsparend. Darüber hinaus benötigt der mitdrehende Sensor keinen wesentlichen Energiespeicher, wie Batterie oder dergleichen, da die Energie an ihn über die drehbare Antenne übertragen wird. Da kein Kontakt, also eine räumliche Trennung, zwischen stationärer und drehbarer Antenne vorhanden ist, ist die Erfindung auch bei Vorhandensein großer elektrischer Feldstärken und bei geeigneter Ausführung des Sensors auch bei Vorhandensein großer magnetischer Feldstärken einsetzbar. Des Weiteren kommt das Verfahren mit wenigen zusätzlichen Bauteilen oder weniger Bauteilen aus.

Bei einer weiteren vorteilhaften Ausgestaltung ist eine mitdrehbare Antenne elektrisch mit einem OFW-Sensor verbunden und auf einer drehbaren Adapterwelle direkt oder integriert in eine sich mit der Welle drehenden Komponente montiert. Eine stationäre Antenne ist elektrisch mit der ersten elektronischen Schaltung verbunden und in eine Komponente integriert, die zum Senden und/oder Empfangen von Hochfrequenz, insbesondere 100 MHz bis 10 GHz, geeignet ausgeführt ist. Vorteilhafterweise sind die physikalische Größen sowohl bei nichtdrehender als auch bei drehender Welle verwendbar. Weiterer Vorteil ist auch, dass insbesondere der OFW-Sensor bei hohen elektrischen und magnetischen Feldstärken in seiner Umgebung verwendbar ist. Außerdem arbeitet die Energie- und Informationsübertragung berührungslos. Somit tritt kein Kontaktverschleiß auf und die Montage ist vereinfacht.

Bei einer weiteren vorteilhaften Ausgestaltung weist das Gehäuse ein- und abtriebsseitig jeweils einen Flansch zur Verbindung mit den Vorrichtungen auf. Von Vorteil ist dabei, dass eine mechanische Standardverbindung verwendbar ist.

Bei einer weiteren vorteilhaften Ausgestaltung ist die erste elektronische Schaltung im stationären Teil des Adapters integriert. Von Vorteil ist dabei, dass der Adapter äußerst kompakt ist und überall ohne großen Aufwand verwendbar ist.

Bei einer weiteren vorteilhaften Ausgestaltung ist das Gehäuse derart ausgeführt, dass das Messsignal für Drehmoment einen hohen Nutzanteil aufweist. Von Vorteil ist dabei, dass sogar eine Verwendung der Messsignale bei einer Steuerung oder Regelung ausführbar ist, die insbesondere auch kleine Änderungen des Messwertes der physikalischen Größen zur Anforderung hat, also ein hochwertiges Messsignal benötigt.

In Weiterbildung ist der Adapter derart ausgeführt, daß er bei einem Verfahren zur Processsteuerung verwendbar ist, wobei mindestens eine physikalische Größe, wie Drehmoment, Querkraft, Verformung oder dergleichen, an dem zwischen Getriebe und Motor eingebauten Adapter meßbar ist und der Prozess in Abhängigkeit von den Messwerten beeinflusst und/oder gesteuert wird. Der Adapter wird dabei vorteilhafterweise als Vorrichtung zur Messdatenerzeugung verwendet. Dies ermöglicht den Einsatz von übergeordneten Steuerungen und/oder Regelungen, insbesondere Drehmomentenregelungen. Außerdem sind auch Diagnose-Einsätze ausführbar, um beispielhaft Überlastungen oder dergleichen zu erkennen und daraufhin geeignete Gegenmaßnahmen zu treffen. Außerdem ist eine Analyse der übertragenen Drehmomente ermöglicht und eine demgemäße Abänderung der Prozesssteuerung. Zu Prozesssteuerungen zählt hierbei auch Maschinensteuerungen.

Bei einer weiteren vorteilhaften Ausgestaltung ist die erste elektronische Schaltung über einen Feldbus mit weiteren elektronischen Schaltungen und/oder Feldbusteilnehmern, wie Zentralrechner oder dergleichen, verbunden. Von Vorteil ist dabei, dass die Informationen über die Messwerte an weitere Vorrichtungen gemeldet werden und somit Notabschaltungen oder Notreaktionen oder andere Änderungen veranlassbar sind. Insbesondere sind die Messwerte zum Steuern und/oder Regeln des Prozesses verwendbar.

Bei einer weiteren vorteilhaften Ausgestaltung wird eine Notabschaltung oder Notreaktion bei Überschreitung kritischer Werte der physikalischen Größe ausgelöst. Von Vorteil ist dabei, dass abhängig von Werten physikalischer Größen, wie beispielsweise das auf die Welle übertragene Drehmoment, der Prozess steuerbar oder regelbar, insbesondere abschaltbar, ist.

Wichtige Merkmale bei der Baureihe von Adaptern sind, dass die Adapter zwischen einen eintreibenden Motor und ein abtreibendes Getriebe, eingebaut sind,

umfassend das Gehäuse A, die Lager L die Adapterwelle W,

die Kupplung K

den motorseitigen Flansch M, den getriebeseitigen Flansch G,

wobei die Baureihe jeweils mindestens zwei Baugrößen von eintreibender Vorrichtung, abtreibender Vorrichtung, Kupplung und/oder Adapter umfasst,

und wobei jeder Adapter durch Z = GAWLKM bezeichenbar ist, wobei die Größen G, A, W, L, K und M Indizes zur Nummerierung der Teile aufweisen, und wobei Z die entsprechenden Indizes aufweist,

und wobei die Baureihe mittels einer zweifach oder mehrfach indizierten Matrix Z beschreibbar ist,

wobei ein Index von Z die Baugröße der eintreibenden Vorrichtung und ein weiterer Index von Z die Baugröße der abtreibenden Vorrichtung bezeichnet,

und wobei zumindest Teile des Adapters in mindestens zwei Baugrößen verwendbar sind,

wobei die Baureihe mit allen ihren Teilen und/oder Komponenten derart ausgelegt, zusammengesetzt, dimensioniert und gestaltet ist, dass

die Matrix Z der Baureihe eine N x P Matrix mit N größer 2 und P größer 2 ist,

und dass aus der Matrix Z der Baureihe eine zweifach indizierte, nicht vollständig verschwindende Matrix entsteht, wenn alle diejenigen Indizes, die nicht Motorgröße oder Getriebegröße darstellen, auf einem jeweiligen Wert festgehalten werden,

wobei die zweifach indizierte, nicht vollständig verschwindende Matrix Indizes aufweist, die Motorgröße und Getriebegröße darstellen, und Untermatrizen aufweist.

Von Vorteil ist, dass die Baureihe in zumindest einer Baugröße Vorrichtungen aus Standard-Komponenten umfasst, die zumindest teilweise durch erfindungsgemäße Komponenten ersetzt sind. Somit können die Standard-Komponenten beispielsweise eines Getriebes einfach ersetzt werden und es müssen keine wesentlich höheren Lagerbestände aufgebaut werden. In Weiterbildung ist bei mehreren Baugrößen dieselbe Axialbohrung, dasselbe Zwischenstück und/oder derselbe Sensor einsetzbar. Dadurch ist eine besonders kostengünstige Fertigung und Lagerhaltung ermöglicht. Diese Wiederverwendungen sind derart geschickt gemäß der Matrix-Struktur der Baureihe ausgeführt, dass eine optimale Reduzierung der Teilevielfalt und/oder Bearbeitungsgänge erreichbar sind.

Bei einer weiteren vorteilhaften Ausgestaltung ist die Baureihe mit allen ihren Teilen und/oder Komponenten derart ausgelegt, zusammengesetzt, dimensioniert und gestaltet, dass die Baureihe mit allen ihren Teilen und/oder Komponenten derart ausgelegt, zusammengesetzt, dimensioniert und gestaltet ist, dass die Matrix Z der Baureihe eine N x P Matrix mit N größer 2 und P größer 2 ist, und dass aus der Matrix Z der Baureihe eine zweifach indizierte, nicht vollständig verschwindende Matrix entsteht, wenn alle diejenigen Indizes, die nicht Motorgröße und auch nicht Getriebegröße darstellen, auf einem jeweiligen Wert festgehalten werden, wobei die zweifach indizierte, nicht vollständig verschwindende Matrix Indizes aufweist, die Motorgröße und Getriebegröße darstellen, und Untermatrizen aufweist.

Von Vorteil ist dabei, dass die Struktur der Matrix, insbesondere das Angeordnetsein von Untermatrizen auf einer Linie oder der Hauptdiagonalen, zu einer kostengünstigen Baureihe gehört, bei der eine möglichst geringe Komplexität und eine möglichst hohe Wiederverwendbarkeit unter gleichzeitiger möglichst hoher Variantenvielfalt erreichbar sind.

Bei einer weiteren vorteilhaften Ausgestaltung bilden die nichtverschwindenden zweifach indiziert darstellbaren Elemente der Matrix Gruppen, die jeweils als quadratische Matrizen von kleinerer Dimension als N oder P darstellbar sind. Von Vorteil ist dabei, dass das Baukastenprinzip innerhalb der Baureihe verwendbar ist und dennoch die Kompaktheit erreichbar ist. Denn prinzipiell sind das Baukastenprinzip nach Stand der Technik und die Kompaktheit, also die möglichst kompakte und technisch optimale Ausführung einer Vorrichtung, gegenläufige Prinzipien. Durch die Gruppenbildung jedoch sind bei der erfindungsgemäßen Baureihe beide Prinzipien gegeneinander abwägbar, wobei wirtschaftliche und technische Vorteile berücksichtigbar sind.

Bei einer weiteren vorteilhaften Ausgestaltung sind die Matrizen der Gruppen nur entlang einer Diagonalen, Linie oder Geraden der Matrix angeordnet. Von Vorteil ist dabei, dass eine möglichst geringe Anzahl von Gruppen gebildet wird, wodurch die Komplexität der Baureihe und der Baureihenmatrix verringerbar ist. Dies hat auch Einsparungen bei der Fertigung und bei den Verwaltungs- und Lagerkosten zur Folge. Außerdem ist die Fehlerrate bei Produktion leichter verringerbar und die Qualität somit vergrößerbar.

Bei einer weiteren vorteilhaften Ausgestaltung überlappen die Gruppen nicht und/oder die N x P-Matrix ist quadratisch, also N gleich P, und die Gruppen sind jeweils als quadratische Matrizen entlang der Hauptdiagonale der N x P - Matrix angeordnet. Von Vorteil ist dabei ebenfalls, dass die Kosten verringerbar sind.

Von Vorteil ist bei dem Fertigen, Vertreiben und Liefern von Antrieben, umfassend Getriebe, Umrichter und/oder Elektromotoren, für internationale Kunden, dass der Kunde eine Bestellung an den Hersteller abgibt mit zumindest der Auswahlmöglichkeit der Bestellung

- eines Antriebs,
- eines erfindungsgemäßen Adapters
- oder eines Antriebs mit zumindest einem solchen Adapter

und dass Komponenten des bestellten Antriebs in zentralen Fertigungsstätten angefertigt werden, worauf die Komponenten an global verteilte Montagewerke geschickt werden, und dass in den global verteilten Montagewerken der vom Kunden bestellte Antrieb zusammengestellt oder zusammengebaut und danach an den Kunden ausgeliefert wird. Vorteilhafterweise ist somit der Standard-Antrieb kundennah zusammenbaubar und äußerst schnell auslieferbar. Bei Bestellung eines erfindungsgemäßen Systems ist ein weiterer Vorteil, dass die erforderliche Komponente von einer zentralen Fertigungsstätte mit dem notwendigen Know-How gefertigt an den Kunden geliefert werden, wobei das Know-How nur an dieser zentralen Fertigungsstätte vorzuhalten ist.

Weitere vorteilhafte Ausgestaltungen ergeben sich aus den abhängigen Ansprüchen.

**Bezugszeichenliste**

| 1 | Getriebe |
|---|---|
| 2 | Abtriebseitiger Flansch des Adapters |
| 3 | Gehäuse |
| 4 | Sensor |
| 5 | Elektronische Schaltung |
| 6 | Erste elektronische Schaltung |
| 7 | Motorseitiger Flansch des Adapters |
| 8 | Motor |
| 9 | Stationäre Antenne |
| 10 | Drehbare Antenne |
| G | Getriebeseitiger Flansch des Adapters |
| A | Gehäuse des Adapters |
| L | Lager |
| W | Adapterwelle |
| K | Kupplung |
| M | Motorseitiger Flansch des Adapters |

Die Erfindung wird nun anhand von Abbildungen näher erläutert:

Figur 1 zeigt einen erfindungsgemäßen, zwischen Motor und Getriebe eingebauten Adapter mit stationärem Sensor.

Figur 2 zeigt einen erfindungsgemäßen, zwischen Motor und Getriebe eingebauten Adapter mit drehbarem Sensor.

Figur 3a zeigt eine erfindungsgemäße Baureihe für Adapter einer Gruppe. Figur 3b zeigt die zugehörige Matrix der Baureihe.

Figur 4a zeigt eine erfindungsgemäße Baureihe für Adapter aus zwei Gruppen. Figur 4b zeigt die zugehörige Matrix der Baureihe.

Figur 5a zeigt eine weitere erfindungsgemäße Baureihe für Adapter aus zwei Gruppen. Figur 5b zeigt die zugehörige Matrix der Baureihe.

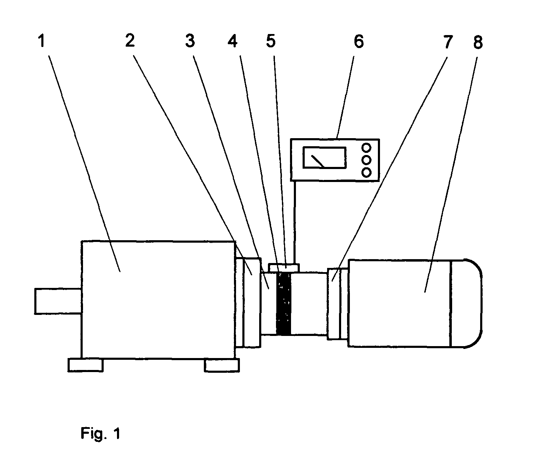

Figur 1 zeigt eine Seitenansicht eines erfindungsgemäßen ersten Ausführungsbeispiels. Dabei ist der Adapter zwischen Motor 8 und Getriebe 1 eingebaut. Der Adapter weist einen getriebeseitigen Flansch 2 des Adapters auf, der am entsprechenden Gegenflansch des Getriebes befestigt wird. Das Gehäuse 3 des Adapters umschließt eine in der Zeichnung nicht gezeigte Adapterwelle, die mittels einer Passfederverbindung mit dem Getriebe verbunden ist. Am anderen Ende ist die Adapterwelle über eine Kupplung mit dem Motor 8 verbunden. Der Sensor 4 ist mit einer elektronischen Schaltung 5 verbunden, die die Messsignale der Messfühler des Sensors 4 verarbeitet und aufbereitet. Die erste elektronische Schaltung 6 weist Mittel zur Anzeige der Messwerte oder von Status auf und ist mittels eines Feldbusses mit weiteren Feldbusteilnehmern, wie insbesondere einer zentralen Steuerung verbunden.

Die Messfühler sind derart ausgeführt, dass das im Gehäuse 3 vom Getriebe 1 an den Motor 8 übertragene Drehmoment messbar ist. Das Vorzeichen dieses übertragenen Drehmoments bestimmt sich je nach Betriebsart des Motors 8, also motorischer oder generatorischer Betriebsart und Drehrichtung.

Der motorseitige Flansch 7 des Adapters und der getriebeseitige Flansch 2 des Adapters sind passend zum jeweiligen entsprechenden Gegenflansch ausgelegt und dimensioniert.

In weiteren erfindungsgemäßen Ausführungsbeispielen wird als Sensor ein Oberflächenwellen-Sensor (OFW-Sensor) oder ein einen Transponder umfassendes System eingesetzt.

Bei dem System mit Transponder sendet die erste stationäre elektronische Schaltung einen hochfrequenten elektromagnetischen Wellenzug, der über eine stationäre Antenne abgestrahlt wird und von einer drehbaren Antenne empfangen wird. Unter Wellenzug wird in dieser Schrift immer auch eine Pulsfolge verstanden

Der Transponder weist eine weitere elektronische Schaltung 5 auf, die ihre Versorgungsenergie aus dem genannten Wellenzug bezieht. Außerdem umfasst diese weitere elektronische Schaltung 5 mindestens einen hochintegrierten Chip, wie Mikroprozessor oder dergleichen, an den kleinste Messfühler, wie Piezoelemente oder Dehnungsmessstreifen oder dergleichen, zur Messung physikalischer Größen angeschlossen sind. Die weitere elektronische Schaltung 5 sendet nach dem Beginn des Eintreffens des beschriebenen Wellenzuges einen Wellenzug zurück, der derart moduliert und/oder codiert ist, dass Informationen über die von den Messfühlern aufgenommenen Werte der physikalischen Größen von der ersten elektronischen Schaltung empfangen und bearbeitet werden können.

Als physikalische Größen werden insbesondere die an der drehbaren Welle auftretende Querkraft und/oder das an die Welle übertragenen Drehmoment erfasst.

Vorteilhaft ist bei dem Einsatz der genannten Transponder, dass die Hochfrequenz fast beliebig wählbar ist, insbesondere sind Transponder im erfindungsgemäßen System mit Frequenzen von 100kHz oder auch bis 10 GHz einsetzbar.

Bei weiteren erfindungsgemäßen Ausführungsbeispielen sind auch Transponder einsetzbar, bei denen die verschiedene Frequenzen für Energie- und Informationsübertragung verwendet werden. Somit stören sich die zugehörigen Wellen nicht und es ist sogar eine im Wesentlichen gleichzeitige Energieübertragung zum Transponder und Informationsübertragung vom und zum Transponder ausführbar.

Bei der Ausführung des Sensors als Oberflächenwellen-Sensor (OFW-Sensor) liegt die von der ersten elektronischen Schaltung über die stationären Antenne ausgestrahlte Hochfrequenz im Bereich von etwa 3 GHz. Es sind aber auch Frequenzen von 100 MHz bis 10 GHZ einsetzbar. Der über die drehbare Antenne empfangene Wellenzug wird als elektrische Spannung an Piezoelemente angelegt, die dann im Takt des Wellenzuges schwingen. Die Piezoelemente sind auf einem Plättchen aufgebracht und erzeugen somit Oberflächenwellen die bis zu ebenfalls auf dem Plättchen aufgebrachten Reflektoren laufen und dort dann reflektiert werden. Die reflektierten Teile treffen zumindest teilweise wieder auf die Piezoelemente, die somit wieder diese akustischen Oberflächenwellen in elektrische Spannungen umwandeln. Somit wird sozusagen ein jeweils einem Reflektor zugeordneter Wellenzug zurückgestrahlt. Über die stationäre Antenne empfängt die erste elektronische Schaltung 6 das Signal und verarbeitet die Informationen, die mittels der Echos an sie übertragen werden.

Da die Laufzeit der akustischen Oberflächenwellen von physikalischen Größen, wie Temperatur und Spannungszuständen des Plättchens oder dergleichen, abhängt, sind durch geeignete Anordnung der Reflektoren Informationen über Stauchung und Dehnung in verschiedenen Richtungen des Plättchens zugänglich und messbar. Das genannte Drehmoment und die genannte Querkraft sind aus solchen Informationen von der ersten elektronischen Schaltung 6 bestimmbar.

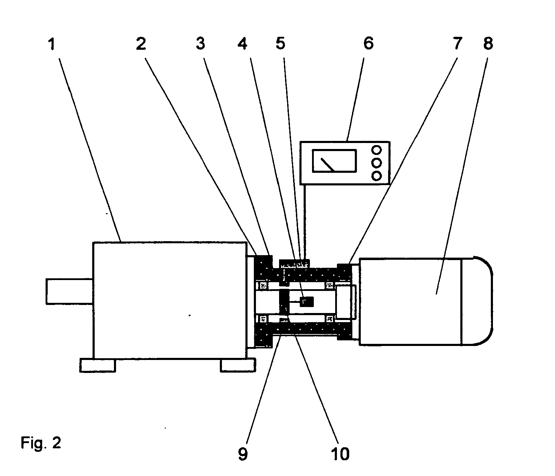

Figur 2 zeigt einen Schnitt durch einen erfindungsgemäßen, zwischen Motor und Getriebe eingebauten Adapter mit drehbarem Sensor. Die stationäre Antenne 9, die elektrisch mit der elektronischen Schaltung 5 verbunden ist, tauscht Energie und Informationen zumindest jeweils unidirektional mit der drehbaren Antenne 10 aus, die elektrisch mit dem Sensor 4 verbunden ist. Der Sensor 4 ist wiederum als OFW-Sensor oder als Transponder ausführbar.

Der Sensor 4 ist wie auch bei dem erfindungsgemäßen Ausführungsbeispiel nach Figur 1 nicht dem Ölraum ausgesetzt. Die Adapterwelle ist derart ausgeführt ,dass ein hoher Nutzanteil im Messsignal erreicht wird. Beispielhaft für Messung des Drehmoments ist eine dünne Wand bei der Adapterwelle, die auch durch eine Bohrung erreichbar ist.

Beispielhaft für Messung des Drehmoments ist eine Adapterwelle mit geeigneter Verdrehsteifigkeit für eine ausreichende Verformung unter Last. Die Steifigkeit wird wahlweise durch eine Bohrung angepasst.

Bei dem Ausführungsbeispiel nach Figur 2 werden keine Biegemomente übertragen, weshalb eine Drehmomentmessung besonders vorteilhaft ohne Störungen oder gegenseitige Beeinflussungen durchführbar ist. Die Drehmomentmessung bezieht sich dabei immer auf die Messung des statischen und dynamischen Drehmoments. D.h., dass bei nichtdrehender oder drehender Adapterwelle eine Messung des Drehmoments jeweils ausführbar ist. Auch dynamische Drehmomente im angeschlossenen Wellenstrang sind zugänglich.

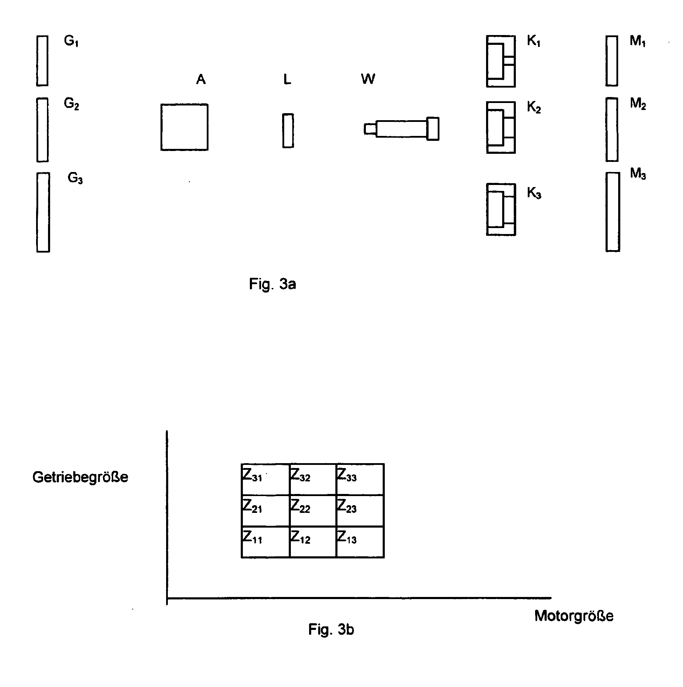

Figur 3a zeigt eine erfindungsgemäße Baureihe für Adapter einer Gruppe. Dabei umfasst die Baureihe des gesamten beispielhaften Antriebs verschiedene Baugrößen für Motoren und Getriebe. In der Figur 3a sind drei solche Baugrößen gezeigt, zu denen der ein- und abtriebsseitige, also motor- und getriebeseitige, Flansch (7 und 2) jeweils angepasst ist. Daher sind für den motorseitigen Flansch 7 die Größen $M_1$ bis $M_3$ und getriebeseitig $G_1$ bis $G_3$ gezeigt. Das Gehäuse A des Adapters passt zu all diesen Flanschen $G_1$ bis $G_3$ und nimmt Lager L zur Führung der Adapterwelle W auf, die über die Kupplungen $K_1$ bis $K_3$ mit den motorseitigen Flanschen $M_1$ bis $M_3$ verbunden werden. Der Vorteil bei dieser Ausführungsbeispiel der Baureihe ist die Mehrfachverwendung des Gehäuses A des Adapters, der Lager L und der Adapterwelle W innerhalb der in der Figur 3 gezeigten Gruppe.

In der Figur 3b ist eine Matrix mit doppelt indizierten Elementen Z gezeigt, deren Indizes Motorgröße und Getriebegröße charakterisieren, die wiederum mit den erzeugten und/oder zu übertragenden Drehmomenten zusammenhängen. Die Elemente $Z_{km}$ sind eine abkürzende Schreibweise für den aus den anderen genannten Teilen zusammengesetzten Adapter gemäß:

$$Z_{km} = G_k A W L K_m M_m$$

Dabei laufen die Indizes k und m jeweils von 1 bis 3.

Eine Matrix ist hierbei ein Zahlenschema und dient der mathematischen Darstellung und Beschreibung der Baureihe. Statt Zahlen werden hier die Variablen G, A, W, L, K, M verwendet. Jedes Teil G, A, W, L, K, M ist vom Fachmann in verschiedenen Größen und/oder Bauarten mit verschiedenen Funktionen ausführbar. Beispielsweise sind Gehäuse, Kupplungen, Flansche und Adapterwellen jeder Form, also jeder Größe und Art, ausführbar. Jedes Teil ist durch eine indizierte Variable beschreibbar, wobei der Index alle diese ausführbaren Formen eines Teiles durchnummeriert, insbesondere auch geordnet nach Größe und/oder anderen Kriterien.

Ein erfindungsgemäßer Adapter ist nur aus zueinander passenden Teilen zusammengebaut. Außerdem wird in der erfindungsgemäßen Baureihe nach Figur 3b nur ein Gehäuse A des Adapters, ein Lager L und eine Adapterwelle W verwendet, weshalb der Index bei diesen Teilen der Übersichtlichkeit halber weggelassen ist. Die in der erfindungsgemäßen Baureihe nach Figur 3b verwendeten Teile G, K und M sind mit jeweils einem Index nummeriert, der nur die in der Baureihe verwendeten jeweiligen Teile nummeriert.

Ein erfindungsgemäßer Adapter ist dabei in der Form GAWLKM beschreibbar, die der Übersichtlichkeit halber als Z darstellbar ist, wobei Z die Indizes der einzelnen Teile übernimmt.

Die spezielle Ausführung der erfindungsgemäßen Baureihe nach Figur 3b führt zu einem zweifach indizierten Z, da die Kupplungen jeweils nur zu genau einem motorseitigen Flansch des Adapters passend ausgeführt sind. Die Teile G, A, W werden vorteiligerweise mehrfach verwendet. Z ist also wie eine zweifach indizierte Matrix darstellbar, wobei es sich bei dieser Matrix im Wesentlichen um ein zweifach indiziertes Zahlenschema handelt. Die Matrix ist in der Figur 2 in der fachüblichen Weise zweidimensional dargestellt, wobei Reihen und Spalten nach Motorgröße und Getriebegröße geordnet sind. Die Indizes sind derart nummeriert, dass mit zunehmendem Index die Motorgröße beziehungsweise die Getriebegröße zunimmt.

Die hier verwendete Matrix stellt also keine Abbildung bei Vektorräumen, sondern im Wesentlichen eine symbolische Anweisung dar, die dem Fachmann die Zuordnung der Teile verständlich macht, insbesondere bei Herstellen und Montage der Baureihe.

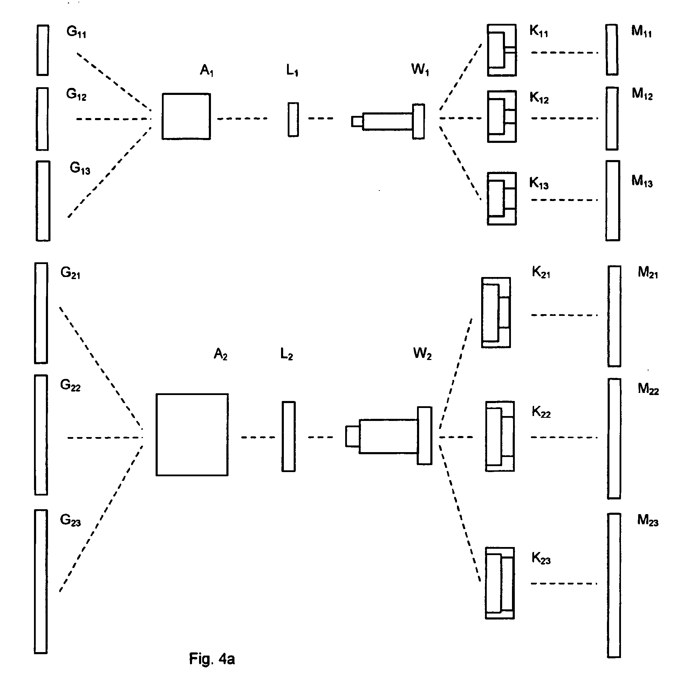

In der Figur 4a ist die Baureihe aus zwei solchen Gruppen gebildet. Motorgröße und Getriebegröße weisen hierbei sechs Größen $G_{11}$ bis $G_{23}$ und $M_{11}$ bis $M_{23}$ auf. Gehäuse A des Adapters, das Lager L und die Adapterwelle W tragen jeweils den Index 1 oder 2 zur Kennzeichnung der jeweiligen Gruppe. Ebenso sind auch die Kupplungen mit einem solchen zusätzliche Gruppenindex als erster Index versehen.

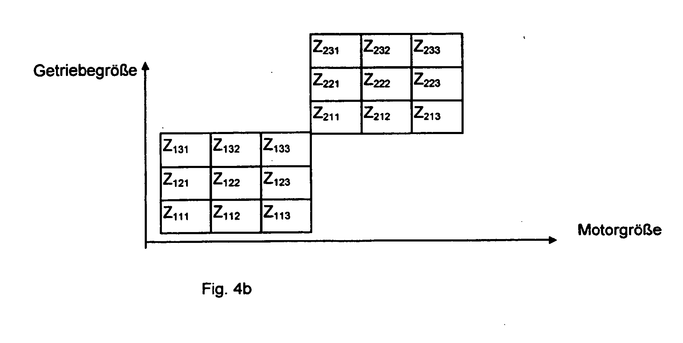

Figur 4b zeigt die zugehörige Matrix mit Elementen Z, die der besseren Übersichtlichkeit mit Hilfe des Gruppenindex g gekennzeichnet sind und eine abkürzende Schreibweise für

$$Z_{gkm} = G_{gk} A_g W_g L_g K_{gm} M_{gm}$$

sind. Dabei laufen wiederum die Indizes k und m jeweils von 1 bis 3. Der Index g für Gruppen läuft dabei von 1 bis 2. Der Gruppenindex dient hier der übersichtlicheren Abzählung.

Die Gruppen sind in dieser Baureihe, die durch eine 6 x 6 - Matrix beschrieben wird, als zwei 3 x 3 Matrizen ausgeführt, die sich nicht überlappen. Sie sind auf der Hauptdiagonale angeordnet. Die restlichen Elemente verschwinden, da die entsprechenden Kombinationen von Gehäuse, Lager, Kupplungen oder dergleichen, nicht zueinander passen oder nicht miteinander verwendbar sind, insbesondere auch wegen der unterschiedlichen Auslegung für zu übertragendes Drehmoment.

Deutlich ist hier zu sehen, dass bei konstantem Gruppenindex jeweils eine 3 x 3 Matrix vorliegt, wobei die Nicht-Gruppenindizes die jeweiligen 3 x 3 Matrizen in der üblichen Weise nummerieren.

Diese Anordnung der 3 x 3 Matrizen auf der Hauptdiagonale drückt die erfindungsgemäße Wiederverwendung der Teile aus.

In weiteren erfindungsgemäßen Ausführungsbeispielen weist die Matrix mehr als zwei Gruppen auf und/oder mehr als zwei Motor- und Getriebegrößen.

In weiteren erfindungsgemäßen Ausführungsbeispielen werden innerhalb einer Gruppe die Kupplungen derart konstruiert und ausgeführt, dass sie an mehrere motorseitige Flansche passen. In diesem Fall ist das Element der Matrix der Gruppe jeweils durch

$$Z_{kmn} = G_k A W L K_m M_n$$

beschrieben. Dabei laufen die Indizes k, m und n jeweils von 1 bis 3. $Z_{kmn}$ stellt also eine dreifach indizierte Matrix dar. $Z_{kmn}$ ist also statt zweidimensional wie in Figur 3b dreidimensional darstellbar, wobei die dritte Dimension der Darstellung dem dritten Index entsprechend die Größe der Kupplung und/oder deren Ausführart ist.

Eine weitere erfindungsgemäße Baureihe ist in entsprechender Weise aus solchen Gruppen überlappend oder nicht überlappend zusammengesetzt. Diese Baureihe ist daher beschreibbar als:

$$Z_{gkmn} = G_{gk} A_g W_g L_g K_{gm} M_{gn}$$

Bei der erfindungsgemäßen Baureihe ist kennzeichnend, dass aus der Matrix Z der Baureihe eine zweifach indizierte, nicht vollständig verschwindende Matrix entsteht, wenn alle diejenigen Indizes, die nicht Motorgröße oder Getriebegröße darstellen, auf einem jeweiligen Wert festgehalten werden, wobei die zweifach indizierte, nicht vollständig verschwindende Matrix Indizes aufweist, die Motorgröße und Getriebegröße darstellen, und Untermatrizen aufweist. Diese Struktur bedeutet einen entscheidenden wirtschaftlichen Vorteil, insbesondere durch Reduzierung der Lagerkosten und Verschlankung der Fertigung und Montage.

Im obigen erfindungsgemäßen Ausführungsbeispiel wird der Gruppenindex g verwendet, der aber auch weggelassen werden kann, wenn die Matrixelemente mit den restlichen Indizes geeignet durchgängig nummeriert werden. Durch die Verwendung des Gruppenindex ist eine übersichtlichere Darstellung der Erfindung gefunden worden, wobei die Struktur der erfindungsgemäß auf der Hauptdiagonalen angeordneten Matrizen gleich mit dem Gruppenindex bei der Nummerierung berücksichtigt wird.

Bei weiteren erfindungsgemäßen Baureihen sind nicht nur die Kupplung K sondern auch die anderen Teile in analoger Weise zusätzlich kombinierbar und tragen daher ebenfalls jeweils einen weiteren Index. Dann ist die Matrix Z höherdimensional darstellbar, wobei zwei Indizes die Motorgröße und Getriebegröße durchnummerieren und die weiteren Indizes die Größen und/oder Ausführarten der entsprechenden Teile. Beispielsweise sind auch Adapterwellen W mit verschiedenen Optionen, wie 'mit Sensorik' oder 'ohne Sensorik', montierbar.

In weiteren erfindungsgemäßen Ausführungsbeispielen werden Adapterwellen und/oder Gehäuse zusätzlich mit einer Innenbohrung versehen, die einen größeren Nutzanteil an Messsignal zur Folge hat, da die Wandstärke einen großen Einfluss auf die Messgröße und ihren Nutzanteil hat. Der Durchmesser der Innenbohrung wird dabei jeweils derart ausgelegt, dass die Steifigkeit reduziert, die Verformung vergrößert, aber keine Gefährdung der Komponenten erreicht wird. Insbesondere werden mit jeweils unterschiedlichen Bohrungen unterschiedliche Messbereiche für Drehmoment oder weitere physikalische Größen erreicht.

In weiteren erfindungsgemäßen Ausführungsbeispielen werden weitere, dem Fachmann bekannte Maßnahmen getroffen, die die Steifigkeit der Adapterwelle oder des Gehäuses ebenfalls beeinflussen. Zu solchen Maßnahmen zählen auch das Anbringen oder Weglassen dazu bestimmter Komponenten.

In weiteren erfindungsgemäßen Ausführungsbeispielen ist die Matrix der Baureihe nicht quadratisch, sonder eine N x P - Matrix. Das Zusammensetzen des nichtverschwindenden Teils der Matrix wiederum aus überlappenden oder nicht überlappenden Gruppen kennzeichnet die Erfindung. Die N x P - Matrix ist dabei derart darstellbar, dass die Gruppen entweder entlang einer Diagonalen oder entlang einer Geraden angeordnet sind. Dabei ist die Gerade eine gedachte Gerade in einer Ebene, in welcher die Elemente der N x P - Matrix als jeweils gleiche, einander berührende Quadrate dargestellt sind, wobei die Anordnungsart der Figuren 3b und 4b entspricht.

Das Anordnen entlang der Geraden ist dann derart zu verstehen, dass die Matrix der jeweiligen Gruppe von der Geraden geschnitten wird.

In weiteren erfindungsgemäßen Ausführungsbeispielen schneidet die Gerade die Matrix der jeweiligen Gruppe in einem Element an der Ecke, insbesondere rechts oben oder links unten, also größter oder kleinster Motor- und Getriebegröße.

Die Erfindung bezieht sich nicht nur auf erfindungsgemäße Vorrichtungen mit Lagern sondern auch auf entsprechende Vorrichtungen mit Lagern und Dichtungen. In diesen Fällen bezieht sich das Bezugszeichen L gegebenenfalls auch auf die jeweilige Dichtung.

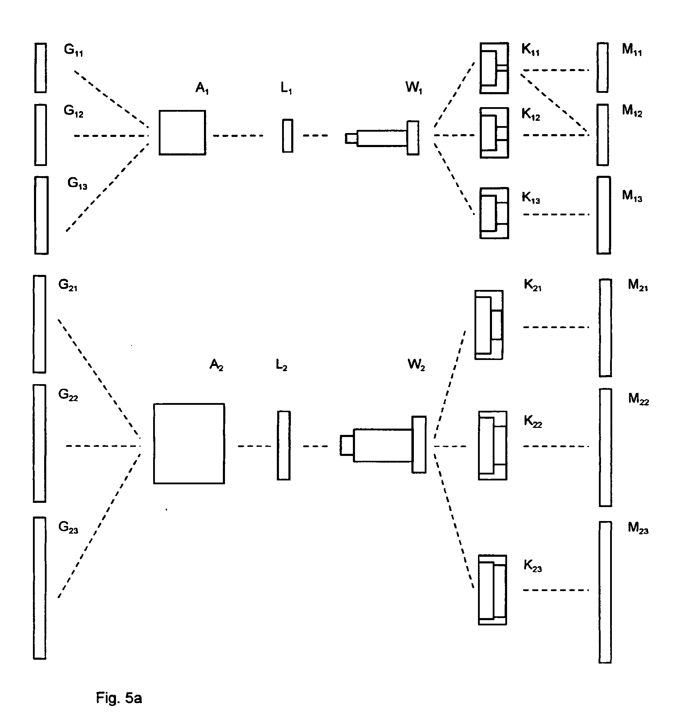

In der Figur 5a ist eine weitere erfindungsgemäße Baureihe für Adapter aus zwei Gruppen dargestellt, wobei die Kupplung $K_{11}$ nicht nur zum motorseitigen Flansch des Adapters $M_{11}$ passt, sondern auch zum motorseitigen Flansch des Adapters $M_{12}$. Beispielhaft ist derselbe Motor mit verschiedenartigen motorseitigen Flanschen $M_{11}$ oder $M_{12}$ verwendbar mit der Kupplung $K_{11}$. Die Kupplung $K_{12}$ ist ebenfalls mit dem motorseitigen Flansch $M_{12}$ verwendbar, wobei der Motor ausgetauscht werden kann gegen einen anderen, beispielsweise mit größerem Ritzelzapfen.

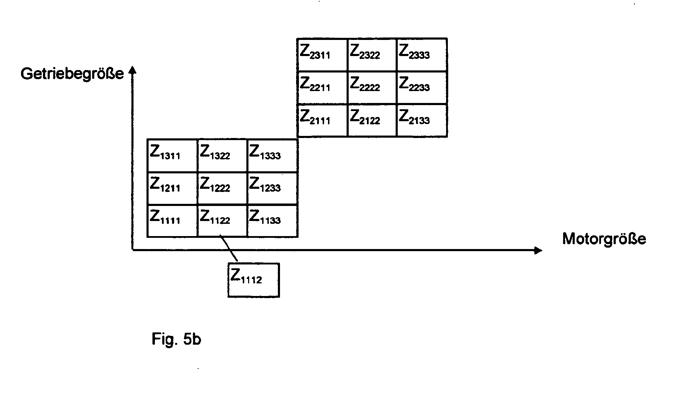

Figur 5b zeigt die zugehörige Matrix der Baureihe. Die Matrixelemente haben hier gegenüber der Figur 4b einen zusätzlichen Index, um die Kupplungsvarianten und Varianten des motorseitigen Flansches zu nummerieren. Dabei ist eine vollständige, zweifach indizierte Darstellung der Matrix der Baureihe nicht in bekannter Weise möglich. Das Element $Z_{1122}$ entspricht

noch dem Element $Z_{112}$ der Figur 4b. Das Element $Z_{1112}$ entspricht der beschriebenen Kombination $K_{11}$ mit $M_{12}$.

Erst nach Festhalten derjenigen Indizes, die nicht Motorgröße oder Getriebegröße darstellen, auf einem jeweiligen Wert ist eine zweidimensional darstellbare Matrix nach Figur 5b erhältlich, die Getriebe- und Motorgröße als Indizes hat und die quadratische Untermatrizen entsprechend der Gruppenbildung zeigt, wobei die Untermatrizen entlang der Hauptdiagonalen angeordnet sind.

Bei weiteren erfindungsgemäßen Ausführungsbeispielen werden Messwerte an verschiedenen Messpunkten abgefragt unter Verwendung nur einer einzigen ersten elektronischen Schaltung. Insbesondere ist somit innerhalb der Baureihe ein Adapter verwendbar, der einen oder mehrere Sensoren am Gehäuse des Adapters aufweist. Oder es ist ein Adapter verwendbar, der einen oder mehrere Sensoren an der Adapterwelle aufweist. Oder es ist ein Adapter verwendbar, der einen oder mehrere Sensoren an der Adapterwelle und am Gehäuse des Adapters aufweist.

Bei einer weiteren vorteilhaften Ausgestaltung sind die eintreibende Vorrichtung, die abtreibende Vorrichtung und der Adapter derart montiert, dass am Gehäuse des Adapters das Reaktionsdrehmoment mittels zumindest eines Sensors messbar ist. Von Vorteil ist dabei, dass die Messung in einfacher Weise ausführbar ist. Insbesondere ist der Austausch von Energie und Information berührungslos oder mittels elektrischer Kabel ausführbar. Außerdem ist zur Messung des Reaktionsdrehmomentes dasselbe System, also insbesondere dieselbe erste elektronische Schaltung, verwendbar. Somit ist es sogar ermöglicht verschiedene Sensoren mit ein und derselben ersten elektronischen Schaltung zu versorgen und Messwerte abzufragen. Somit sind Messwerte an verschiedenen Messpunkten kostengünstig abfragbar

## Patentansprüche

1.  Adapter,
    wobei der Adapter zwischen einen eintreibenden Motor und ein abtreibendes Getriebe einbaubar ist,
    wobei der Adapter ein Gehäuse, das zur Aufnahme von Lagern für eine Adapterwelle ausgebildet ist, die Adapterwelle und zumindest einen Sensor umfasst,
    wobei am Gehäuse des Adapters ein motorseitiger Flansch des Adapters und ein getriebeseitiger Flansch des Adapters vorhanden ist, wobei jeder Flansch mit einem jeweiligen Gegenflansch des Motors oder Getriebes verbindbar ist, so daß das Gehäuse mit den Flanschen zur Übertragung eines Reaktionsdrehmoments geeignet ist,
    die Adapterwelle ein- und abtriebseitig derart gestaltet ist, dass die Adapterwelle direkt und/oder mittels einer Kupplung an Motor und Getriebe anschließbar oder ankoppelbar ist,

    wobei die vom Sensor aufgenommenen Messwerte zumindest teilweise berührungslos vom Adapter zu einer ernsten elektronischen Schaltung übertragbar sind,
    wobei zwischen mindestens einer Antenne des Adapters, die mit dem Sensor elektrisch verbunden ist, und einer stationären Antenne, die mit der ersten elektrischen Schaltung elektrisch verbindbar ist, Informationen und/oder Energie mindestens jeweils unidirektional übertragbar sind.

2.  Adapter nach Anspruch 1,
    **dadurch gekennzeichnet, dass**
    Getriebe, Motor und der Adapter derart montiert sind, dass am Gehäuse des Adapters das Reaktionsdrehmoment mittels zumindest eines Sensors messbar ist.

3.  Adapter nach einem der vorangegangenen Ansprüche,
    **dadurch gekennzeichnet, dass**
    er derart ausgeführt ist, dass er bei einem Verfahren zur Prozesssteuerung verwendbar ist, wobei mindestens eine physikalische Größe, wie Drehmoment, Querkraft, Verformung, an dem zwischen Getriebe und Motor eingebauten Adapter messbar ist und der Prozess in Abhängigkeit von den Messwerten beeinflusst und gesteuert wird.

4.  Adapter nach einem der vorangegangenen Ansprüche,
    **dadurch gekennzeichnet, dass**
    die erste elektronische Schaltung über ein Netzwerk mit weiteren Teilnehmern oder einen Feldbus mit weiteren elektronischen Schaltungen und/oder Feldbusteilnehmern, wie Zentralrechner verbunden ist.

5.  Adapter nach einem der vorangegangenen Ansprüche,
    **dadurch gekennzeichnet, dass**
    eine Notabschaltung oder Notreaktion bei Überschreitung kritischer Werte der physikalischen Größe auslösbar ist.

6.  Adapter nach einem der vorangegangenen Ansprüche,
    **dadurch gekennzeichnet, dass**
    eine drehbare Antenne elektrisch mit einem OFW-Sensor verbunden ist und auf einer drehbaren Welle direkt oder integriert in eine sich mit der Welle drehenden Komponente montiert ist und
    die stationäre Antenne elektrisch mit einer ersten elektronischen Schaltung verbunden und in eine Komponente integriert ist, die zum Senden und/oder Empfangen von Hochfrequenz, insbesondere 100MHz bis 10 GHz, geeignet ausgeführt ist.

7. Baureihe von Adaptern mit mindestens einem Adapter nach Anspruch 1
zum Einbau zwischen einen eintreibenden Motor und ein abtreibendes Getriebe,
umfassend das Gehäuse A, die Lager L, die Adapterwelle W, die, Kupplung K
den motorseitigen Flansch M den getriebeseitigen Flansch G,
wobei die Baureihe jeweils mindestens zwei Baugrößen von eintreibender Vorrichtung, abtreibender Vorrichtung, Kupplung und/oder Adapter umfasst,
und wobei jeder Adapter durch Z = GAWLKM bezeichenbar ist, wobei die Größen G, A, W, L, K und M Indizes zur Nummerierung der Teile aufweisen, und wobei Z die entsprechenden Indizes aufweist,
und wobei die Baureihe mittels einer zweifach oder mehrfach indizierten Matrix Z beschreibbar ist,
wobei ein Index von Z die Baugröße des eintreibenden Motors und ein weiterer Index von Z die Baugröße des abtreibenden Getriebes bezeichnet,
und wobei zumindest Teile des Adapters in mindestens zwei Baugrößen verwendbar sind,
wobei die Baureihe mit allen ihren Teilen und/oder Komponenten derart ausgelegt, zusammengesetzt, dimensioniert und gestaltet ist, dass
die Matrix Z der Baureihe eine N x P Matrix mit N größer 2 und P größer 2 ist,
und dass aus der Matrix Z der Baureihe eine zweifach indizierte, nicht vollständig verschwindende Matrix entsteht, wenn alle diejenigen Indizes, die nicht Motorgröße oder Getriebegröße darstellen, auf einem jeweiligen Wert festgehalten werden,
wobei die zweifach indizierte, nicht vollständig verschwindende Matrix Indizes aufweist, die Motorgröße und Getriebegröße darstellen, und Untermatrizen aufweist.

8. Baureihe nach Anspruch 7
**dadurch gekennzeichnet, dass**
die Untermatrizen Gruppen darstellen, innerhalb derer ein oder mehrere Teile wiederverwendbar sind.

9. Baureihe nach einem der vorangegangenen Ansprüche 7 oder 8,
**dadurch gekennzeichnet, dass**
die Untermatrizen der Matrix jeweils als quadratische Matrizen von kleinerer Dimension als N oder P darstellbar sind.

10. Baureihe nach einem der vorangegangenen Ansprüche 7 bis 9,
**dadurch gekennzeichnet, dass**
die Untermatrizen der Gruppen nur entlang einer Linie, einer Geraden und/oder Diagonale, der Matrix angeordnet sind,

11. Baureihe nach einem der vorangegangenen Ansprüche 7 bis 10,

**dadurch gekennzeichnet, dass**
die Untermatrizen nicht überlappen,

12. Baureihe nach einem der vorangegangenen Ansprüche 7 bis 11,
**dadurch gekennzeichnet, dass**
die Matrix Z quadratisch ist, also N gleich P ist, und dass die Untermatrizen jeweils als quadratische Matrizen entlang der Hauptdiagonale der Matrix Z angeordnet sind,

13. Baureihe nach einem der vorangegangenen Ansprüche 7 bis 12,
**dadurch gekennzeichnet, dass**
die Baugröße des eintreibenden Motors die Motorgröße und die Baugröße des abtreibenden Getriebes die Getriebegröße ist,

14. Baureihe nach einem der vorangegangenen Ansprüche 7 bis 13,
**dadurch gekennzeichnet, dass**
zumindest ein Gehäuse eines Adapters und/oder zumindest ein Lager und/oder
zumindest eine Adapterwelle und/oder
zumindest eine Kupplung und/oder
zumindest ein eintriebseitiger Flansch und/oder
zumindest ein abtriebseitiger Flansch
jeweils bei mindestens zwei Baugrößen von eintreibender Vorrichtung, abtreibender Vorrichtung verwendbar ist,

15. Baureihe nach einem der vorangegangenen Ansprüche 7 bis 14
**dadurch gekennzeichnet, dass**
die Adapterwelle ein- und/oder abtriebseitig derart gestaltet ist, dass die Adapterwelle direkt und/oder mittels der Kupplung an den eintreibenden Motor und das abtreibende Getriebe mit einer Welle-Nabe-Verbindung, reib- oder formschlüssigen Verbindung, Passfederverbindung, einer Zahnkupplung und/oder Klauenkupplung anschließbar oder ankoppelbar ist,

16. Baureihe nach mindestens einem der vorangegangenen Ansprüche 7 bis 15
**dadurch gekennzeichnet, dass**
die physikalischen Größen Temperatur, Drehmoment, Querkraft, Kraftverteilung, Verformung, radiale und/oder axiale Kraft umfassen,

17. Baureihe nach einem der vorangegangenen Ansprüche 7 bis 16,
**dadurch gekennzeichnet, dass**
mindestens ein Sensor derart gestaltet und in den Adapter derart integriert oder eingebaut
ist, dass die physikalischen Größen im drehbaren und/oder stationären Teil des Adapters gemessen werden,

**18.** Baureihe nach einem der vorangegangenen Ansprüche 7 bis 17,
**dadurch gekennzeichnet, dass**
der eintreibende Motor das abtreibende Getriebe und der Adapter derart montiert sind, dass am Gehäuse des Adapters das Reaktionsdrehmoment mittels zumindest eines Sensors messbar ist.

**19.** Baureihe nach einem der vorangegangenen Ansprüche 7 bis 18,
**dadurch gekennzeichnet, dass**
die vom Sensor aufgenommenen Messwerte zumindest teilweise berührungslos vom Adapter zu einer ersten elektronischen Schaltung übertragbar sind,

**20.** Baureihe nach einem der vorangegangenen Ansprüche 7 bis 19,
**dadurch gekennzeichnet, dass**
der Sensor eine weitere elektronische Schaltung umfasst, die von der ersten elektronischen Schaltung mit Energie versorgt wird.

**21.** Baureihe nach einem der vorangegangenen Ansprüche 7 bis 20,
**dadurch gekennzeichnet, dass**
zwischen mindestens einer Antenne des Adapters, die mit dem Sensor elektrisch verbunden ist, und einer stationären Antenne, die mit der ersten elektrischen Schaltung elektrisch verbunden ist, Informationen und/oder Energie mindestens jeweils unidirektional übertragbar sind.

**22.** Baureihe nach einem der vorangegangenen Ansprüche 7 bis 21,
**dadurch gekennzeichnet, dass**
der Adapter einen OFW-Sensor umfasst,

**23.** Baureihe nach einem der vorangegangenen Ansprüche 7 bis 22,
**dadurch gekennzeichnet, dass**
die physikalische Größen das statische und/oder dynamische Drehmoment umfassen

**24.** Baureihe nach einem der vorangegangenen Ansprüche 7 bis 23,
**dadurch gekennzeichnet, dass**
die erste elektronische Schaltung im stationären Teil des Adapters integriert ist,

**25.** Baureihe nach mindestens einem der vorangegangenen Ansprüche 7 bis 24,
**dadurch gekennzeichnet, dass**
das Gehäuse derart ausgeführt ist, dass das Messsignal für Drehmoment einen hohen Nutzanteil aufweist.

**Claims**

**1.** Adaptor,
the adaptor being mountable between a driving motor and a driven gearing,
the adaptor comprising a housing which is designed to receive bearings for an adaptor shaft, the adaptor shaft and at least one sensor,
a motor-side flange of the adaptor and a gearing-side flange of the adaptor being present on the housing of the adaptor, each flange being connectable to a respective mating flange of the motor or gearing, so that the housing with the flanges is suitable for transmitting a reaction torque,
the adaptor shaft being configured on the driving and driven side in such a way that the adaptor shaft is connectable or couplable directly and/or by means of a coupling to motor and gearing,
the measured values picked up by the sensor being transmittable at least partly contactlessly from the adaptor to a first electronic circuit,
information and/or energy being transmittable at least in each case unidirectionally between at least one adaptor antenna, which is electrically connected to the sensor, and a stationary antenna which is electrically connectable to the first electric circuit.

**2.** Adaptor according to Claim 1,
**characterised in that**
gearing, motor and the adaptor are assembled in such a way that the reaction torque on the housing of the adaptor is measurable by means of at least one sensor.

**3.** Adaptor according to one of the preceding claims,
**characterised in that**
it is designed in such a way that it is usable in a method for process control, in which
at least one physical quantity, such as torque, transverse force, deformation, on the adaptor mounted between gearing and motor is measurable
and the process is influenced and controlled in dependence on the measured values.

**4.** Adaptor according to one of the preceding claims,
**characterised in that**
the first electronic circuit is connected via a network to further users or via a field bus to further electronic circuits and/or field-bus users, such as central computers.

**5.** Adaptor according to one of the preceding claims,
**characterised in that**
an emergency shutdown or emergency reaction is triggerable if critical values of the physical quantity are exceeded.

**6.** Adaptor according to one of the preceding claims,

**characterised in that**
a rotatable antenna is electrically connected to an SW sensor and is mounted on a rotatable shaft directly or by integration in a component rotating with the shaft, and the stationary antenna is electrically connected to a first electronic circuit and integrated in a component which is designed to be suitable for sending and/or receiving high frequency, in particular 100 MHz to 10 GHz.

7. Series of adaptors having at least one adaptor according to Claim 1,
for mounting between a driving motor and a driven gearing,
comprising the housing A, the bearings L, the adaptor shaft W, the coupling K, the motor-side flange M, the gearing-side flange G,
the series comprising in each case at least two sizes of driving device, driven device, coupling and/or adaptor,
and each adaptor being denotable by Z = GAWLKM, where the sizes G, A, W, L, K and M have subscripts for numbering the parts, and where Z has the corresponding subscripts,
and the series being describable by means of a double- or multiple-subscripted matrix Z,
where one subscript of Z denotes the size of the driving motor and a further subscript of Z denotes the size of the driven gearing,
and at least parts of the adaptor being usable in at least two sizes,
the series with all its parts and/or components being designed, assembled, dimensioned and configured in such a way that
the matrix Z of the series is an N x P matrix where N is greater than 2 and P is greater than 2,
and that a double-subscripted matrix which does not completely vanish results from the matrix Z of the series if all those subscripts which do not represent motor size or gearing size are fixed at a respective value,
the double-subscripted matrix which does not completely vanish having subscripts which represent motor size and gearing size, and sub-matrices.

8. Series according to Claim 7,
**characterised in that**
the sub-matrices represent groups in which one or more parts are reusable.

9. Series according to one of the preceding Claims 7 or 8,
**characterised in that**
the sub-matrices of the matrix are representable in each case as square matrices of smaller dimension than N or P.

10. Series according to one of the preceding Claims 7 to 9,
**characterised in that**
the sub-matrices of the groups are arranged only along a line, a straight line and/or diagonal of the matrix.

11. Series according to one of the preceding Claims 7 to 10,
**characterised in that**
the sub-matrices do not overlap.

12. Series according to one of the preceding Claims 7 to 11,
**characterised in that**
the matrix Z is square, i.e. N is equal to P,
and **in that** the sub-matrices are in each case arranged as square matrices along the main diagonal of the matrix Z.

13. Series according to one of the preceding Claims 7 to 12,
**characterised in that**
the size of the driving motor is the motor size and the size of the driven gearing is the gearing size.

14. Series according to one of the preceding Claims 7 to 13,
**characterised in that**
at least one housing of an adaptor and/or
at least one bearing and/or
at least one adaptor shaft and/or
at least one coupling and/or
at least one driving-side flange and/or
at least one driven-side flange
is usable in each case for at least two sizes of driving device, driven device.

15. Series according to one of the preceding Claims 7 to 14,
**characterised in that**
the adaptor shaft is configured on the driving and/or driven side in such a way that the adaptor shaft is connectable or couplable directly and/or by means of the coupling to the driving motor and driven gearing by a shaft-hub connection, frictional or positive-locking connection, feather key connection, a denture clutch and/or dog clutch.

16. Series according to at least one of the preceding Claims 7 to 15,
**characterised in that**
the physical quantities comprise temperature, torque, transverse force, force distribution, deformation, radial and/or axial force.

17. Series according to one of the preceding Claims 7 to 16,
**characterised in that**

at least one sensor is configured in such a way, and integrated or mounted in the adaptor in such a way, that the physical quantities in the rotatable and/or stationary part of the adaptor are measured.

18. Series according to one of the preceding Claims 7 to 17,
**characterised in that**
the driving motor, the driven gearing and the adaptor are assembled in such a way that the reaction torque on the housing of the adaptor is measurable by means of at least one sensor.

19. Series according to one of the preceding Claims 7 to 18,
**characterised in that**
the measured values picked up by the sensor are transmittable at least partly contactlessly from the adaptor to a first electronic circuit.

20. Series according to one of the preceding Claims 7 to 19,
**characterised in that**
the sensor comprises a further electronic circuit which is supplied with energy by the first electronic circuit.

21. Series according to one of the preceding Claims 7 to 20,
**characterised in that**
information and/or energy are transmittable at least in each case unidirectionally between at least one adaptor antenna, which is electrically connected to the sensor, and a stationary antenna which is electrically connected to the first electric circuit.

22. Series according to one of the preceding Claims 7 to 21,
**characterised in that**
the adaptor comprises an SW sensor.

23. Series according to one of the preceding Claims 7 to 22,
**characterised in that**
the physical quantities comprise the static and/or dynamic torque.

24. Series according to one of the preceding Claims 7 to 23,
**characterised in that**
the first electronic circuit is integrated in the stationary part of the adaptor.

25. Series according to at least one of the preceding Claims 7 to 24,
**characterised in that**
the housing is designed in such a way that the measuring signal for torque has a high useful portion.

**Revendications**

1. Adaptateur,
l'adaptateur pouvant être monté entre un moteur d'entraînement et un réducteur entraîné,
l'adaptateur comprenant un boîtier conçu pour recevoir des paliers pour un arbre d'adaptateur, l'arbre d'adaptateur et au moins un capteur,
une bride côté moteur de l'adaptateur et une bride côté réducteur de l'adaptateur étant présentes sur le boîtier de l'adaptateur, chaque bride étant raccordable à une contre-bride respective de telle manière que le boîtier avec les brides permette la transmission d'un couple de réaction,
l'arbre d'adaptateur étant conçu côté entraînement et/ou entraîné de telle manière que l'arbre d'adaptateur soit raccordable ou accouplable au moteur et au réducteur directement ou par l'intermédiaire d'un accouplement,
les valeurs de mesure enregistrées par le capteur étant transmissibles au moins partiellement sans contact de l'adaptateur à un premier circuit électronique,
des informations et/ou de l'énergie étant transmissibles au moins chaque fois de façon unidirectionnelle entre au moins une antenne de l'adaptateur qui est connectée électriquement au capteur et une antenne stationnaire qui est connectable électriquement au premier circuit électronique.

2. Adaptateur selon la revendication 1,
**caractérisé par le fait**
**que** moteur, réducteur et adaptateur sont montés de telle manière que le couple de réaction soit mesurable au moyen d'au moins un capteur sur le boîtier de l'adaptateur.

3. Adaptateur selon l'une des revendications précédentes,
**caractérisé par le fait**
**qu'**il est utilisable dans un procédé de commande de processus dans lequel
au moins une grandeur physique telle que couple, force transversale, déformation est mesurable sur l'adaptateur monté entre moteur et réducteur
et le processus est influencé et commandé en fonction des valeurs de mesure.

4. Adaptateur selon l'une des revendications précédentes,
**caractérisé par le fait**
**que** le premier circuit électronique est connecté via un réseau à d'autres participants ou un bus de terrain à d'autres circuits électroniques et/ou participants au bus de terrain tels qu'un ordinateur central.

5. Adaptateur selon l'une des revendications précédentes,

**caractérisé par le fait**

**qu'**un arrêt d'urgence ou une réaction d'urgence est déclenchable en cas de dépassement de valeurs critiques de la grandeur physique.

6. Adaptateur selon l'une des revendications précédentes,
   **caractérisé par le fait**
   **qu'**une antenne tournante est connectée électriquement à un capteur à ondes de surface ou capteur SAW et montée sur un arbre tournant directement on en étant intégrée dans un composant tournant avec l'arbre et
   l'antenne stationnaire est connectée électriquement à un premier circuit électronique et intégrée dans un composant qui est conçu de manière appropriée pour émettre et/ou recevoir une haute fréquence, en particulier de 100 MHz à 10 GHz.

7. Gamme d'adaptateurs comprenant au moins un adaptateur selon la revendication 1
   destinés à être montés entre un moteur d'entraînement et un réducteur entraîné,
   comprenant le boîtier A, les paliers L, l'arbre d'adaptateur W, l'accouplement K, la bride côté moteur M, la bride côté réducteur G,
   la gamme comprenant chaque fois au moins deux tailles de construction du dispositif d'entraînement, du dispositif entraîné, de l'accouplement et/ou de l'adaptateur,
   et chaque adaptateur pouvant être désigné par Z = GAWLKM, les grandeurs G, A, W, L, K et M présentant des indices de numérotation des pièces et Z présentant les indices correspondants,
   et la gamme pouvant être décrite au moyen d'une matrice Z à deux ou plusieurs indices, un indice de Z désignant la taille de construction du moteur d'entraînement et un autre indice de Z la taille de construction du réducteur entraîné,
   et au moins des pièces de l'adaptateur étant utilisables en au moins deux tailles de construction,
   la gamme avec toutes ses pièces et/ou composants étant conçue, composée, dimensionnée et formée de telle manière que
   la matrice Z de la gamme soit une matrice N x P avec N supérieur à 2 et P supérieur à 2,
   et qu'il résulte de la matrice Z de la gamme une matrice à deux indices ne disparaissant pas complètement si tous les indices qui ne représentent pas la taille du moteur ou la taille du réducteur sont retenus à une valeur respective,
   la matrice à deux indices ne disparaissant pas complètement présentant des indices qui représentent la taille du moteur ou la taille du réducteur et présentant des sous-matrices.

8. Gamme selon la revendication 7,
   **caractérisée par le fait**

que les sous-matrices représentent des groupes à l'intérieur desquels une ou plusieurs pièces sont réutilisables.

9. Gamme selon l'une des revendications précédentes 7 ou 8,
   **caractérisée par le fait**
   que les sous-matrices de la matrice sont représentables chaque fois sous forme de matrices carrées de plus petite dimension que N ou P.

10. Gamme selon l'une des revendications précédentes 7 à 9,
    **caractérisée par le fait**
    que les sous-matrices des groupes ne sont disposées que le long d'une ligne, d'une droite et/ou d'une diagonale de la matrice.

11. Gamme selon l'une des revendications précédentes 7 à 10,
    **caractérisée par le fait**
    que les sous-matrices ne se recouvrent pas.

12. Gamme selon l'une des revendications précédentes 7 à 11,
    **caractérisée par le fait**
    que la matrice Z est carrée, donc que N égale P, et **que** les sous-matrices sont chaque fois disposés sous forme de matrices carrées le long de la diagonale principale de la matrice Z.

13. Gamme selon l'une des revendications précédentes 7 à 12,
    **caractérisée par le fait**
    que la taille de construction du moteur d'entraînement est la taille du moteur et la taille de construction du réducteur entraîné est la taille du réducteur.

14. Gamme selon l'une des revendications précédentes 7 à 13,
    **caractérisée par le fait**
    **qu'**au moins un boîtier d'un adaptateur et/ou
    au moins un palier et/ou
    au moins un arbre d'adaptateur et/ou
    au moins un accouplement et/ou
    au moins une bride côté entraînement et/ou
    au moins une bride côté entraîné
    est utilisable chaque fois avec au moins deux tailles de construction du dispositif d'entraînement, du dispositif entraîné.

15. Gamme selon l'une des revendications précédentes 7 à 14,
    **caractérisée par le fait**
    que l'arbre d'adaptateur est conçu côté entraînement et/ou entraîné de telle manière que l'arbre d'adaptateur soit raccordable ou accouplable au moteur d'entraînement directement ou par l'intermédiaire de l'accouplement et au réducteur entraîné par une liaison arbre-moyeu, une liaison par friction ou engagement positif, une liaison par clavette, un accouplement à dents et/ou un accouplement à griffes.

16. Gamme selon au moins l'une des revendications précédentes 7 à 15,
    **caractérisée par le fait**
    **que** les grandeurs physiques comprennent température, couple, force transversale, distribution de force, déformation, force radiale et/ou axiale.

17. Gamme selon l'une des revendications précédentes 7 à 16,
    **caractérisée par le fait**
    **qu'**au moins un capteur est conçu de telle manière et intégré ou monté dans l'adaptateur de telle manière que les grandeurs physiques soient mesurées dans la partie tournante et/ou stationnaire de l'adaptateur.

18. Gamme selon l'une des revendications précédentes 7 à 17,
    **caractérisée par le fait**
    **que** le moteur d'entraînement, le réducteur entraîné et l'adaptateur sont montés de telle manière que le couple de réaction soit mesurable au moyen d'au moins un capteur sur le boîtier de l'adaptateur.

19. Gamme selon l'une des revendications précédentes 7 à 18,
    **caractérisée par le fait**
    **que** les valeurs de mesure enregistrées par le capteur sont transmissibles au moins partiellement sans contact de l'adaptateur à un premier circuit électronique.

20. Gamme selon l'une des revendications précédentes 7 à 19,
    **caractérisée par le fait**
    **que** le capteur comprend un autre circuit électronique qui est alimenté en énergie par le premier circuit électronique.

21. Gamme selon l'une des revendications précédentes 7 à 20,
    **caractérisée par le fait**
    **que** des informations et/ou de l'énergie sont transmissibles au moins chaque fois de manière unidirectionnelle entre au moins une antenne de l'adaptateur qui est connectée électriquement au capteur et une antenne stationnaire qui est connectée électriquement au premier circuit électronique.

22. Gamme selon l'une des revendications précédentes 7 à 21,
    **caractérisée par le fait**
    **que** l'adaptateur comprend un capteur à ondes de surface ou capteur SAW.

23. Gamme selon l'une des revendications précédentes 7 à 22,
    **caractérisée par le fait**
    **que** les grandeurs physiques comprennent le couple statique et/ou dynamique.

24. Gamme selon l'une des revendications précédentes 7 à 23,
    **caractérisée par le fait**
    **que** le premier circuit électronique est intégré dans la partie stationnaire de l'adaptateur.

25. Gamme selon au moins l'une des revendications précédentes 7 à 24,
    **caractérisée par le fait**
    **que** le boîtier est réalisé de telle manière que le signal de mesure pour le couple présente une composante utile élevée.

EP 1 160 553 B1

1    2    3  4  5      6        7  8

Fig. 1

16

1   2   3   4   5   6   7   8

Fig. 2

9   10

G₁

G₂

A    L    W    K₁    M₁

K₂    M₂

G₃    M₃

K₃

Fig. 3a

Getriebegröße

| Z₃₁ | Z₃₂ | Z₃₃ |
| Z₂₁ | Z₂₂ | Z₂₃ |
| Z₁₁ | Z₁₂ | Z₁₃ |

Motorgröße

Fig. 3b

Fig. 4a

Getriebegröße

| $Z_{231}$ | $Z_{232}$ | $Z_{233}$ |
| $Z_{221}$ | $Z_{222}$ | $Z_{223}$ |
| $Z_{211}$ | $Z_{212}$ | $Z_{213}$ |

| $Z_{131}$ | $Z_{132}$ | $Z_{133}$ |
| $Z_{121}$ | $Z_{122}$ | $Z_{123}$ |
| $Z_{111}$ | $Z_{112}$ | $Z_{113}$ |

Motorgröße

Fig. 4b

Fig. 5a

Getriebegröße

| $Z_{2311}$ | $Z_{2322}$ | $Z_{2333}$ |
|------------|------------|------------|
| $Z_{2211}$ | $Z_{2222}$ | $Z_{2233}$ |
| $Z_{2111}$ | $Z_{2122}$ | $Z_{2133}$ |

| $Z_{1311}$ | $Z_{1322}$ | $Z_{1333}$ |
|------------|------------|------------|
| $Z_{1211}$ | $Z_{1222}$ | $Z_{1233}$ |
| $Z_{1111}$ | $Z_{1122}$ | $Z_{1133}$ |

Motorgröße

| $Z_{1112}$ |
|------------|

Fig. 5b